# EUROPEAN PATENT APPLICATION

(11) **EP 4 635 725 A1**
(43) Date of publication of application: **22.10.2025**
(21) Application number: 23903157.8
(22) Date of filing: 08.11.2023
(51) Int. Cl.: B29D 30/38

(54) **BELT MANUFACTURING APPARATUS, FOLDING-BACK ROLLER, AND BELT MANUFACTURING METHOD**

(30) Priority: 12.12.2022 JP 2022198096
(71) Applicant: BRIDGESTONE CORPORATION, Chuo-ku Tokyo 104-8340 (JP)
(72) Inventor: KATO, Daisuke, Tokyo 104-8340 (JP)
(74) Representative: Marks & Clerk LLP
(86) International application number: PCT/JP2023/040298
(87) International publication number: WO 2024/127859

(57) **Abstract**

Provided are a belt manufacturing device, a folding-back roller, and a belt manufacturing method that do not degrade the reliability and durability of a tire even when material used in the belt layer of the tire is made thinner. The belt manufacturing apparatus (200) includes: a conveyance unit for main belt material (10) (main belt conveyance unit (50)); and a rubber sheet folding-back unit (30) including a folding-back roller (31) that folds back, from one side of the main belt material (10) to the other side of the main belt material (10), regions of a rubber sheet (20) that outwardly protrude from both ends of the main belt material (10) in the width direction. The folding-back roller (31) has a roller surface that comes into contact with the rubber sheet (20) and is formed by an elastic member (31c) that can be elastically deformed inward in the radial direction of the folding-back roller (31).

## Description

### CROSS-REFERENCE TO RELATED APPLICATION

The present application claims priority based on JP 2022-198096 A filed in Japan on December 12, 2022, the entire specification of which is incorporated herein by reference.

### TECHNICAL FIELD

The present disclosure relates to a belt manufacturing apparatus, a folding-back roller, and a belt manufacturing method.

### BACKGROUND

In recent years, there has been an ever-increasing demand to reduce rolling resistance of tires in order to improve fuel efficiency of automobiles. One means of reducing rolling resistance of tires is to reduce the weight of tire members, in particular the belt layer. For example, in the method of manufacturing a tire reinforcement member described in Patent Literature (PTL) 1, an attempt is made to reduce tire weight by making a main belt material (tire reinforcement member) and a rubber sheet covering an edge portion of the main belt material (edge tape) thinner.

### CITATION LIST

### Patent Literature

PTL 1: JP 2007-276215 A

### SUMMARY

### (Technical Problem)

However, when the main belt material and the rubber sheet are made thinner, wrinkles more easily occur when the rubber sheet is attached to the edge portion of the main belt material, and air more easily enters between the main belt material and the rubber sheet, leaving room for improvement in terms of belt layer reliability and durability.

It would be helpful to provide a belt manufacturing apparatus, a folding-back roller, and a belt manufacturing method that do not degrade the reliability and durability of a tire even when material used in the belt layer of the tire is made thinner.

### (Solution to Problem)

To solve the technical problem described above, the belt manufacturing apparatus according to the present disclosure is
[1] a belt manufacturing apparatus for manufacturing a belt in which both ends of main belt material in the width direction are wrapped with a rubber sheet, the belt manufacturing apparatus comprising:
   a conveyance unit for the main belt material; and
   a rubber sheet folding-back unit including a folding-back roller configured to fold back, from one side of the main belt material to the other side of the main belt material, regions of the rubber sheet that outwardly protrude from both ends of the main belt material in the width direction, wherein
   the folding-back roller is disposed at both ends of the main belt material in the width direction, and a roller surface that comes into contact with the rubber sheet is formed by an elastic member that can be elastically deformed inward in the radial direction of the folding-back roller.

By adoption of such a configuration, the rubber sheet receives elastic force from the elastic member in the direction toward the center of the width direction of the main belt material, and therefore the rubber sheet can be bent while pressing the rubber sheet against the main belt material with a defined load. Therefore, even when width W of the main belt material varies within an expected range, the folding-back roller can continuously follow the width W of the main belt material, and the elastic member continuously provides elastic force to the main belt material and the rubber sheet in the direction toward the center of the width direction. Thus, the occurrence of defects can be suppressed, where examples of defects include air entering between the rubber sheet and the main belt material when folding-back the rubber sheet when the width of the main belt material is smaller than a standard width, or a wrinkle on the rubber sheet when folding-back the rubber sheet when the width of the main belt material is larger than the standard width.

Further, the belt manufacturing apparatus according to the present disclosure,

configured as described under [1], above, preferably further comprises a rubber sheet supply unit configured to supply the rubber sheet to both ends in the width direction on the one side of the main belt material being conveyed, and to supply the rubber sheet overlapped on the main belt material so as to outwardly protrude from both ends in the width direction of the main belt material being conveyed.

By adoption of such a configuration, the rubber sheet can be precisely positioned relative to the main belt material in the width direction of the main belt material, effectively suppressing the occurrence of defects such as a wrinkle on the rubber sheet when the rubber sheet is folded back.

Further, the belt manufacturing apparatus according to the present disclosure,

configured as described under [1] or [2], above, is preferably configured such that the elastic member is a spring member.

By adoption of such a configuration, the folding-back roller can follow the width of the main belt material with a simple configuration and press the rubber sheet against the width direction end of the main belt material with a defined load.

Further, the belt manufacturing apparatus according to the present disclosure,

configured as described under any one of [1] to [3], above, is preferably further configured such that the folding-back roller is disposed on the upstream side where the main belt material is brought into the rubber sheet folding-back unit, and the belt manufacturing apparatus preferably further comprises an auxiliary roller downstream of the folding-back roller that is configured to promote folding-back of the rubber sheet to the other side.

By adoption of such a configuration, a rubber sheet that has been folded by the folding-back roller to approximately a right angle relative to the main belt material can be further folded back to align with the other side of the main belt material.

Further, the belt manufacturing apparatus according to the present disclosure,

configured as described under [4], above, is preferably further configured such that the auxiliary roller, relative to the folding-back roller or another auxiliary roller adjacent on the upstream side, is inclined in a direction that increases the folding angle of the rubber sheet as the rubber sheet comes into contact with a roller surface of the auxiliary roller.

By adoption of such a configuration, a rubber sheet that has been folded by the folding-back roller to approximately a right angle relative to the main belt material can be further gradually folded back to align with the other side of the main belt material.

Further, the belt manufacturing apparatus according to the present disclosure,

configured as described under [4] or [5], above, is preferably further configured such that the roller surface of the auxiliary roller is provided on outer rings of bearings that are disposed in a plurality of positions along the axial direction and are rotatable relative to a shaft member.

By adoption of such a configuration, the rotation of the roller surface can be changed in the axial direction according to the state of contact between the roller surface of the auxiliary roller and the rubber sheet, thereby suppressing an increase in friction between the roller surface of the auxiliary roller and the rubber sheet.

Further, the belt manufacturing apparatus according to the present disclosure,

configured as described under any one of [4] to [6], above, is preferably further configured such that the roller surface of the auxiliary roller is coated with an anti-adhesion coating by filling recesses in irregularities of the roller surface with a resin.

By adoption of such a configuration, sticking of the rubber sheet to the roller surface of the auxiliary roller can be effectively suppressed, and conveyance resistance can be suppressed. Further, the rubber sheet is not subjected to unintended tension, and therefore wrinkling of the rubber sheet can be suppressed.

Further, the belt manufacturing apparatus according to the present disclosure,

configured as described under [2], above, is preferably further configured such that the main belt material and the rubber sheet pass through a position in the rubber sheet folding-back unit that is higher than a height position of the main belt material in the conveyance unit that is upstream, and higher than a height position of the rubber sheet in the rubber sheet supply unit.

By adoption of such a configuration, appropriate tension is applied to the main belt material and the rubber sheet in the rubber sheet folding-back unit, and the width direction end of the rubber sheet is pulled slightly downward in the rubber sheet folding-back unit, hanging downwards relative to the main belt material. This can inhibit the rubber sheet from coming into strong contact with the folding-back roller.

Further, the folding-back roller according to the present disclosure is
a folding-back roller used in a belt manufacturing apparatus for manufacturing a belt including a main belt material that has both ends in the width direction wrapped with a rubber sheet, wherein
the folding-back roller is configured to fold back, from one side of the main belt material to the other side of the main belt material, regions of the rubber sheet that outwardly protrude from both ends of the main belt material in the width direction, the folding-back roller comprising:
   a shaft member; a plurality of rotating members that are arranged separated in the axial direction of the shaft member and are rotatable around the shaft member; and an elastic member that connects the rotating members in the axial direction and forms a roller surface with which the rubber sheet comes into contact.

By adoption of such a configuration, the rubber sheet receives elastic force from the elastic member in the direction toward the center of the width direction of the main belt material, and therefore the rubber sheet can be bent while pressing the rubber sheet against the main belt material with a defined load. Therefore, even when width W of the main belt material varies within an expected range, the folding-back roller can continuously follow the width W of the main belt material, and the elastic member continuously provides elastic force to the main belt material and the rubber sheet in the direction toward the center of the width direction. Thus, the occurrence of defects can be suppressed, where examples of defects include air entering between the rubber sheet and the main belt material when folding-back the rubber sheet when the width of the main belt material is smaller than a standard width, or a wrinkle on the rubber sheet when folding-back the rubber sheet when the width of the main belt material is larger than the standard width.

Further, the belt manufacturing method according to the present disclosure is
a belt manufacturing method for manufacturing a belt including a main belt material that has both ends in the width direction wrapped with a rubber sheet, the belt manufacturing method comprising:
a step of conveying the main belt material; and
a step of folding back, from one side of the main belt material to the other side of the main belt material, regions of the rubber sheet that outwardly protrude from both ends of the main belt material in the width direction, by means of a folding-back roller, wherein
the folding-back roller is disposed at both ends of the main belt material in the width direction, and a roller surface that comes into contact with the rubber sheet is formed by an elastic member that can be elastically deformed inward in the radial direction of the folding-back roller.

By adoption of such a configuration, the rubber sheet receives elastic force from the elastic member in the direction toward the center of the width direction of the main belt material, and therefore the rubber sheet can be bent while pressing the rubber sheet against the main belt material with a defined load. Therefore, even when width W of the main belt material varies within an expected range, the folding-back roller can continuously follow the width W of the main belt material, and the elastic member continuously provides elastic force to the main belt material and the rubber sheet in the direction toward the center of the width direction. Thus, the occurrence of defects can be suppressed, where examples of defects include air entering between the rubber sheet and the main belt material when folding-back the rubber sheet when the width of the main belt material is smaller than a standard width, or a wrinkle on the rubber sheet when folding-back the rubber sheet when the width of the main belt material is larger than the standard width.

### (Advantageous Effect)

According to the present disclosure, a belt manufacturing apparatus, a folding-back roller, and a belt manufacturing method can be provided that do not degrade the reliability and durability of a tire even when material used in the belt layer of the tire is made thinner.

### BRIEF DESCRIPTION OF THE DRAWINGS

In the accompanying drawings:
FIG. 1A is a diagram illustrating a configuration of a belt manufacturing apparatus according to an embodiment of the present disclosure;
FIG. 1B is a cross-section diagram of a belt produced by a belt manufacturing apparatus according to an embodiment of the present disclosure;
FIG. 2 is a perspective diagram illustrating a configuration of a rubber sheet folding-back unit used in a belt manufacturing apparatus according to an embodiment of the present disclosure;
FIG. 3 is a front view cross-section diagram of a folding-back roller of a rubber sheet folding-back unit used in a belt manufacturing apparatus according to an embodiment of the present disclosure;
FIG. 4A is a cross-section diagram illustrating a main belt material of standard width in contact with an elastic member of the folding-back roller illustrated in FIG. 3;
FIG. 4B is a cross-section diagram illustrating a main belt material of a width smaller than the standard width, in contact with the elastic member of the folding-back roller illustrated in FIG. 3;
FIG. 4C is a cross-section diagram illustrating a main belt material of a width larger than the standard width, in contact with the elastic member of the folding-back roller illustrated in FIG. 3; and
FIG. 5 is a flowchart illustrating a procedure of a belt manufacturing method according to an embodiment of the present disclosure.

### DETAILED DESCRIPTION

A belt manufacturing apparatus 200 according to the present disclosure is described below, with reference to the drawings. Members and sites common to each drawing are marked with the same reference signs.

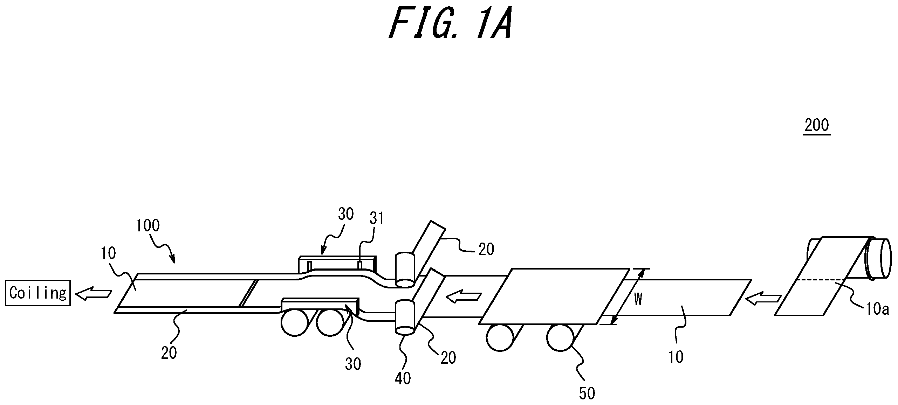

FIG. 1A is a diagram illustrating a configuration of the belt manufacturing apparatus 200 according to an embodiment of the present disclosure.

As illustrated in FIG. 1A, the belt manufacturing apparatus 200 includes: a main belt conveyance unit 50 for conveying main belt material 10, which is the main member of a belt 100; a rubber sheet supply unit 40 that supplies a rubber sheet 20 to both ends in the width direction of one side (top side in FIG. 1A) of the main belt material 10 being conveyed; and a rubber sheet folding-back unit 30 including a folding-back roller 31 that folds back, from one side of the main belt material 10 to the other side (bottom side in FIG. 1A) of the main belt material 10, regions of the rubber sheet 20 that outwardly protrude from both ends of the main belt material 10 in the width direction. The width direction of the main belt material 10 is orthogonal to the longitudinal direction (left-right direction in FIG. 1A) in the plane of the main belt material 10.

As illustrated in FIG. 1A, the main belt conveyance unit 50 conveys the main belt material 10, cut and joined from main belt roll material 10a in a roll state, in the direction of the arrow in the diagram toward the rubber sheet folding-back unit 30 disposed downstream (left side in FIG. 1A). The main belt roll material 10a is cut at defined intervals so that cut width W (that is, width W of the main belt material 10 after joining) is equal, but the cut width W has a variation of about 2 mm to 3 mm (peak to peak), and therefore the variation in the cut width W becomes variation of the width W of the main belt material 10 after joining.

Although FIG. 1A illustrates only a conveyor conveying the main belt material 10 as the main belt conveyance unit 50, the main belt conveyance unit 50 may include a control motor, a control device, and the like in addition to the conveyor.

According to the present embodiment, the main belt material 10 has a thickness of about 0.8 mm, for example, and has a structure with a plurality of cords embedded in coating rubber. In the main belt material 10, typically, multiple cords are drawn together in parallel. Such cords are typically steel cords. Further, there is no particular restriction on the structure of such cords. However, from the viewpoint of effectively achieving both improved tire durability and low rolling resistance, the cords preferably have a 1 × N structure in which N filaments are twisted together (where N is an integer selected from 2 to 6). In particular, for a tire having a tire load index of less than 100, the cords described above preferably have a 1 × 2 structure, and for a tire having a tire load index of 100 or more, the cords described above preferably have a 1 × 5 structure. Further, from the same viewpoint, the cords are preferably monofilaments that are not twisted together and are drawn in parallel. Further, in the case of the 1 × N structure described above, the cords may have a 1 × N open structure, where the filaments are twisted together with a spacing between each other without contacting each other. Cords having an open structure have superior fatigue resistance compared to cords having filaments twisted together while in contact with each other.

The 1 × N open structure cords may be formed by placing unvulcanized rubber between the filaments and twisting them together, or by coating the surface of the filaments with unvulcanized rubber and then twisting them together.

The filaments of the cords used in the main belt material 10 are preferably classified as ST grade (super tensile strength cord) or UT grade (ultra tensile strength cord) as specified in ISO 17832:2018, and in particular are preferably classified as UT grade. In such a case, both improved tire durability and lower rolling resistance can be effectively achieved.

The main belt material 10 is not limited to the forms described above as long as the main belt material 10 has some reinforced configuration.

The coating rubber used for the main belt material 10 is not particularly limited as long as it is a typical rubber composition capable of coating the cords. An example of the rubber component is diene rubber, and in particular, natural rubber or isoprene rubber are preferred. Further, a filler such as carbon black may be blended into the coating rubber to an extent that does not affect performance, such as adhesiveness and durability as a coating rubber. As the carbon black, HAF class carbon black is preferred, and the content of carbon black in the coating rubber may be 50 mass parts to 70 mass parts per 100 mass parts of the rubber component. Further, aside from the components described above, the coating rubber may contain, for example, a vulcanization accelerator; a crosslinking chemical such as sulfur, zinc oxide, or the like; an adhesion promoter such as a cobalt compound including a cobalt salt, or the like; an age resistor; an oil; a resins; or the like, as appropriate. As the age resistor, examples include an amine age resistor such as 6PPD, a bisphenol age resistor such as o-MBp14, and the like, and one or more of such age resistors may be used alone or in combination.

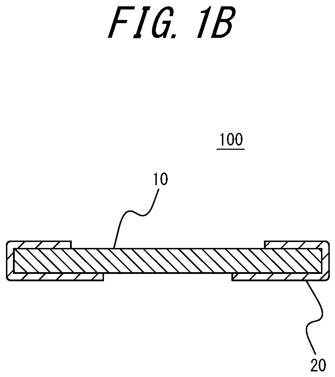

The main belt roll material 10a that has been cut and joined is conveyed downstream (to the left in FIG. 1A), and the rubber sheet 20 from the rubber sheet supply unit 40 is supplied to both ends in the width direction of one side (top side in FIG. 1A) of the main belt material 10. The rubber sheet supply unit 40 supplies the rubber sheet 20 overlapped on the one side (top side) of the main belt material 10 so as to outwardly protrude from both ends in the width direction of the main belt material 10 being conveyed. According to the present embodiment, the rubber sheet 20 is disposed so that the region of the rubber sheet 20 that outwardly protrudes from the main belt material 10 in the width direction is wider than the width of the region of the rubber sheet 20 that overlaps the top surface of the main belt material 10. As illustrated in FIG. 1B, the belt 100 produced by the belt manufacturing apparatus 200 according to the present embodiment has a configuration in which the width of the rubber sheet 20 that overlaps the other side of the main belt material 10 (the bottom side in FIG. 1A and FIG. 1B) is larger than the width of the rubber sheet 20 that overlaps the one side of the main belt material 10 (the top side in FIG. 1A and FIG. 1B). According to the present embodiment, when 30 mm is used as the width of the rubber sheet 20, the arrangement may be such that, for example, there is a 10 mm overlap on the one side and a 20 mm overlap on the other side. According to such a configuration of the belt 100, when two of the belts 200 are overlapped, formation of a gap between the belts 100 can be suppressed by stacking the belts so that the other sides of the main belt material 10 (bottom sides in Figures 1A and 1B) are in close contact with each other. However, there is no limitation to this configuration, and the width of the rubber sheet 20 overlapping the one side of the main belt material 10 may be configured to be equal to the width of the rubber sheet 20 overlapping the other side of the main belt material 10. Further, the width of the rubber sheet 20 overlapping the other side of the main belt material 10 may be configured to be smaller than the width of the rubber sheet 20 overlapping the one side of the main belt material 10.

Although FIG. 1A illustrates only a conveyor conveying the rubber sheet 20 as the rubber sheet supply unit 40, the rubber sheet supply unit 40 may include a control motor, a control device, and the like, in addition to the conveyor.

According to the present embodiment, thickness of the rubber sheet 20 may be about 0.4 mm to 0.5 mm, for example. The material of the rubber sheet 20 is not particularly limited. The same rubber composition as that of the coating rubber of the main belt material 10 may be used, for example.

Downstream of the rubber sheet supply unit 40 (left side in FIG. 1A) is the rubber sheet folding-back unit 30 including the folding-back roller 31 that folds back, to the other side of the main belt material 10, regions of the rubber sheet 20 that outwardly protrude from both ends of the main belt material 10 in the width direction. The rubber sheet folding-back unit 30 is disposed so that the main belt material 10 passes through a position higher than the height at the main belt conveyance unit 50 upstream, as illustrated in FIG. 1A. The rubber sheet folding-back unit 30 is provided on both sides of the main belt material 10 in the width direction, with the rubber sheet 20 overlapping both sides in the width direction, as illustrated in FIG. 1A.

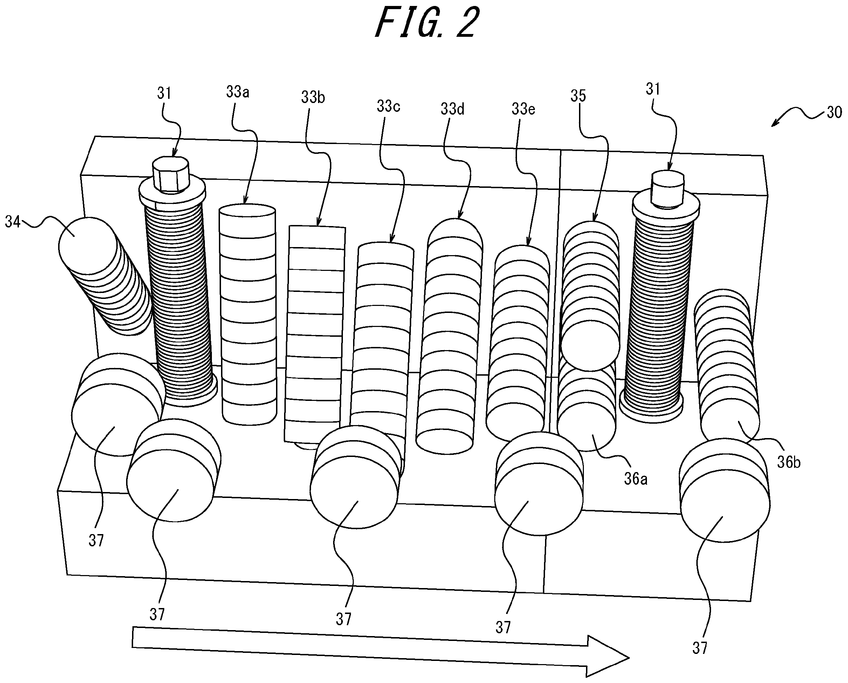

FIG. 2 illustrates one side of the rubber sheet folding-back unit 30 provided on both sides of the main belt material 10 in the width direction. As illustrated in FIG. 2, the rubber sheet folding-back unit 30 includes the folding-back roller 31 that folds back, to the other side of the main belt material 10, the regions of the rubber sheet 20 that outwardly protrude from both ends of the main belt material 10 in the width direction. The left side in FIG. 2 is the upstream side, and the main belt material 10 and rubber sheet 20 are brought into the rubber sheet folding-back unit 30 from the left side of FIG. 2, in the direction of the arrow.

The main belt material 10 that is brought into the rubber sheet folding-back unit 30 together with the rubber sheet 20 is supported from below by main belt material support rollers 37. Further, a rubber sheet holding roller 34 is disposed above the main belt material 10 that is brought in, at the left end of the rubber sheet folding-back unit 30. The leading end of the rubber sheet holding roller 34 is disposed inclined in a direction of increasing upward separation from the main belt material 10 from an end in the width direction of the main belt material 10 toward the center in the width direction of the main belt material 10. The rubber sheet holding roller 34 inhibits the main belt material 10 and the rubber sheet 20 from strongly impacting an elastic member 31c (spring member) included in the folding-back roller 31 described below and damaging the elastic member 31c, such as when the width W of the main belt material 10 is larger than the standard width, for example. In other words, the rubber sheet holding roller 34 presses the main belt material 10 and the region of the end of the rubber sheet 20 in the width direction downward to soften the contact with the folding-back roller 31.

Further, according to the present embodiment, as illustrated in FIG. 1A, the main belt material 10 and the rubber sheet 20 pass through a position in the rubber sheet folding-back unit 30 that is higher than the height position of the main belt material 10 in the main belt conveyance unit 50 upstream, and higher than the height position of the rubber sheet 20 in the rubber sheet supply unit 40. According to this configuration, appropriate tension is applied to the main belt material 10 and the rubber sheet 20 in the rubber sheet folding-back unit 30, and the width direction end of the rubber sheet 20 is pulled slightly downward in the rubber sheet folding-back unit 30, hanging downwards relative to the main belt material 10. This also can inhibit the rubber sheet 20 from coming into strong contact with the folding-back roller 31.

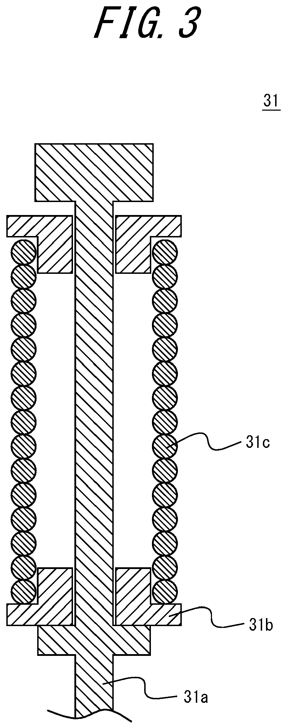

The main belt material 10 and the rubber sheet 20 that have passed the rubber sheet holding roller 34 pass the folding-back roller 31, which is oriented in a vertical direction approximately perpendicular to the main belt material 10. As illustrated in FIG. 3, the folding-back roller 31 includes: a shaft member 31a; a plurality of rotating members 31b that are arranged separated in the axial direction of the shaft member 31a and are rotatable around the shaft member 31a; and the elastic member 31c that connects the rotating members 31b in the axial direction and forms a roller surface with which the rubber sheet 20 comes into contact.

According to the present embodiment, the elastic member 31c is configured as a tensile spring, and is fixed to the rotating members 31b by fitting an outer surface of a reduced diameter portion of each of the rotating members 31b, disposed in the vicinity of but separated from axial direction ends of the shaft member 31a, to the inner surface of the tensile spring. The elastic member 31c fixed to the rotating members 31b is rotatable around the axis relative to the shaft member 31a together with the rotating members 31b.

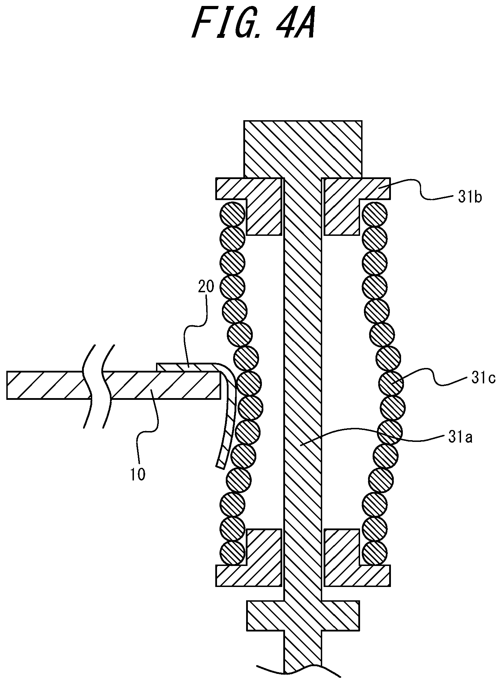

FIG. 4A illustrates the main belt material 10 having a standard width W and the rubber sheet 20 fixed thereto in contact with the elastic member 31c of the folding-back roller 31. The elastic member 31c of the folding-back roller 31 is disposed in the width direction such that when in contact with the main belt material 10 having a standard width and the rubber sheet 20, the elastic member 31c is elastically deformed inward in the radial direction so as to approach the shaft member 31a. With this configuration, the main belt material 10 and the rubber sheet 20 receive elastic force from the elastic member 31c in the direction toward the center of the width direction, and therefore the rubber sheet 20 can be bent while pressing the rubber sheet 20 against the main belt material 10 with a defined load. The radial direction is the direction along a straight line perpendicular to the central axis line passing through the central axis line of the folding-back roller 31 (a line running top-to-bottom through the left-right direction center in FIG. 3). Further, inward in the radial direction means the direction approaching the central axis line along the straight line.

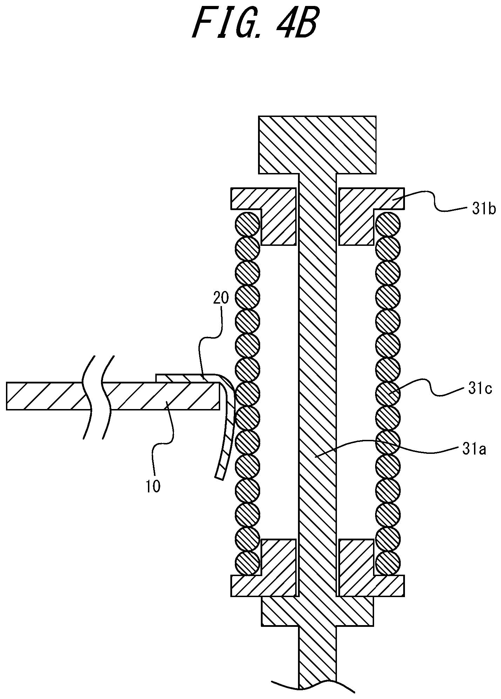

FIG. 4B illustrates the rubber sheet 20 in contact with the elastic member 31c of the folding-back roller 31 when the main belt material 10 has a width W smaller than the standard width. According to the present embodiment, when the main belt material 10 that has a lower limit of the width W is brought in, the elastic member 31c is disposed in the width direction such that the elastic member 31c is slightly elastically deformed inward in the radial direction by contact with the rubber sheet 20. With this configuration, the main belt material 10 and the rubber sheet 20 receive elastic force from the elastic member 31c in the direction toward the center of the width direction, and therefore the rubber sheet 20 can be bent while pressing the rubber sheet 20 against the main belt material 10 with an appropriate load.

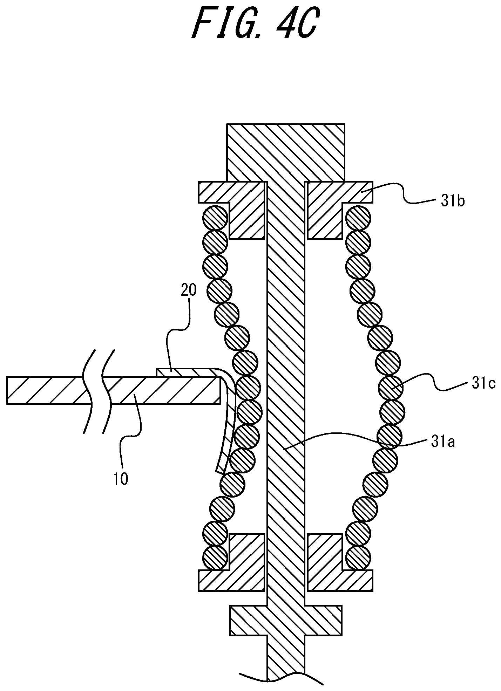

FIG. 4B illustrates the rubber sheet 20 in contact with the elastic member 31c of the folding-back roller 31 when the main belt material 10 has a width W larger than the standard width. According to the present embodiment, when the main belt material 10 that has an upper limit of the width W is brought in, as illustrated in FIG. 4C, the elastic member 31c is disposed in the width direction such that the elastic member 31c is greatly elastically deformed inward in the radial direction by contact with the rubber sheet 20, to the extent of approaching close to but not contacting the shaft member 31a. With this configuration, the main belt material 10 and the rubber sheet 20 receive elastic force from the elastic member 31c in the direction toward the center of the width direction, and therefore the rubber sheet 20 can be bent while pressing the rubber sheet 20 against the main belt material 10 with an appropriate load.

As mentioned above, according to the present embodiment, the configuration is such that the main belt material 10 and the rubber sheet 20 always receive elastic force from the elastic member 31c in the direction toward the center of the width direction, even when the width W of the main belt material 10 varies within an expected range. This configuration allows the folding-back roller 31 to follow the width W of the main belt material 10 and allows the folding-back roller 31 to press the rubber sheet 20 against the width direction end of the main belt material 10 with a defined load. Accordingly, the occurrence of defects can be suppressed, where examples of defects include air entering between the rubber sheet 20 and the main belt material 10 when folding-back the rubber sheet 20 when the width W of the main belt material 10 is smaller than a standard width, or a wrinkle on the rubber sheet 20 when folding-back the rubber sheet 20 when the width W of the main belt material 10 is larger than the standard width.

According to the present embodiment, about 2 mm to 3 mm is assumed as the variation of the width W of the main belt material 10, and about 1 mm to 1.5 mm is assumed as the positional variation of the end of the main belt material 10 in FIG. 4A to FIG. 4C.

The rubber sheet 20 that has been folded approximately 90 degrees to the other side (bottom side) of the main belt material 10 by the folding-back roller 31 is gradually folded by five auxiliary rollers from a first auxiliary roller 33a to a fifth auxiliary roller 33e, which are disposed adjacently downstream of the folding-back roller 31 in FIG. 2, so as to align with the other side (bottom side in FIG. 1A) of the main belt material 10. That is, the five auxiliary rollers from the first auxiliary roller 33a to the fifth auxiliary roller 33e may also be considered part of a folding-back roller group of the present embodiment.

As illustrated in FIG. 2, the first auxiliary roller 33a is disposed, with respect to the folding-back roller 31 on the upstream side (left side in FIG. 2), so that the lower end relative to the upper end of the first auxiliary roller 33a is inclined by 15 degrees upward toward the center in the width direction of the main belt material 10. Further, the second auxiliary roller 33b is disposed, with respect to the first auxiliary roller 33a that is adjacent on the upstream side, so that the lower end relative to the upper end of the second auxiliary roller 33b is more inclined by an additional 15 degrees upward toward the center in the width direction of the main belt material 10. Thus, the five auxiliary rollers from the first auxiliary roller 33a to the fifth auxiliary roller 33e are arranged, with respect to the upstream adjacent auxiliary roller, such that the lower end relative to the upper end of the downstream adjacent auxiliary roller is more inclined by an additional 15 degrees upward toward the center of the width direction of the main belt material 10. Thus, the fifth auxiliary roller 33e is disposed at an angle of about 75 degrees relative to the folding-back roller 31 on the upstream side. With this configuration, the rubber sheet 20 passing the folding-back roller 31 on the upstream side is folded in a direction where the folding angle increases by 15 degrees each time it is brought into contact with a roller surface of the five auxiliary rollers from the first auxiliary roller 33a to the fifth auxiliary roller 33e. Accordingly, the rubber sheet 20 can be folded back gradually and smoothly from a state approximately perpendicular to the main belt material 10 to a state of attachment to the other (lower) side of the main belt material 10.

According to the present embodiment, the roller surfaces of the first auxiliary roller 33a to the fifth auxiliary roller 33e are provided on the outer rings of ball bearings that are disposed in a plurality of positions along axial directions and are rotatable relative to a shaft member.

The roller surfaces of the first auxiliary roller 33a to the fifth auxiliary roller 33e may be coated with an anti-adhesion coating to prevent adhesion to the rubber sheet 20. The anti-adhesion coating is formed by filling recesses in irregularities of the roller surface with a resin. Examples of anti-adhesion coatings include Tosical^{®} (Tosical is a registered trademark in Japan, other countries, or both) S coating (serial name: TS-1080) supplied by Tosico Corporation, and the like. The anti-adhesion coating may be applied to the outer rings of the ball bearings described above, or to roller surfaces other than the ball bearings.

When the width W of the main belt material 10 is greater than the standard width, the width direction end of the main belt material 10 can be bent upward so that the main belt material 10 can be supported by the upper portions of the auxiliary rollers. When the width W of the main belt material 10 is smaller than the standard width, the width direction end of the main belt material 10 can hang downward so that the main belt material 10 can be supported by the bottom portions of the auxiliary rollers. That is, even when the width W of the main belt material 10 is larger or smaller than the standard width, the first auxiliary roller 33a to the fifth auxiliary roller 33e can always be in contact with and fold back the rubber sheet 20 toward the underside of the main belt material 10.

The main belt material 10 and the rubber sheet 20 that have passed the fifth auxiliary roller 33e pass through the height position between a main belt material holding roller 35 and main belt material supporting rollers 36a, 36b, which are adjacent to the fifth auxiliary roller 33e and arranged above and below.

Finally, the main belt material 10 comes into contact with the folding-back roller 31 on the downstream side (right side of FIG. 2). The main belt material 10 is pressed in the width direction center direction by the folding-back roller 31 on the downstream side to ensure the folding-back of the rubber sheet 20 and to stabilize the conveyance of the main belt material 10. The process described above completes the attachment of the rubber sheet 20 to the upper and lower surfaces of the main belt material 10 to form the belt 100.

According to the present embodiment, the configuration is that the folding-back roller 31 including the elastic member 31c is disposed at the upstream and downstream ends of the rubber sheet folding-back unit 30, but this is not a limitation. The folding-back roller 31 including the elastic member 31c may be provided at only the upstream side of the rubber sheet folding-back unit 30, and may be provided at three or more locations. The folding-back roller 31 including the elastic member 31c is preferably provided upstream of the auxiliary roller.

Further, according to the present embodiment, the roller surfaces of the first auxiliary roller 33a to the fifth auxiliary roller 33e are configured to be made of stainless steel bearings, but this is not a limitation, and at least one of the first auxiliary roller 33a to the fifth auxiliary roller 33e may be provided with a roller surface configured as an elastic member.

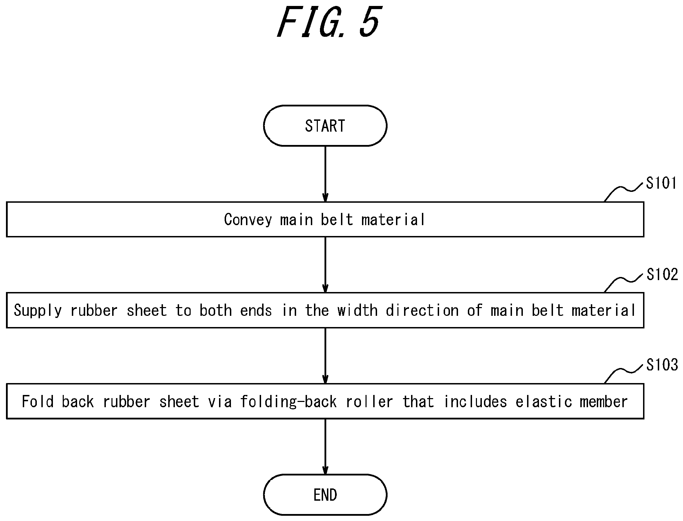

The following describes the procedure of the belt manufacturing method according to the present embodiment, with reference to FIG. 5. When manufacturing the belt 100 according to the present embodiment, first, the main belt material 10, cut and joined from the main belt roll material 10a, is conveyed downstream by the main belt conveyance unit 50 that includes a conveyor (step S101 in FIG. 5). The main belt conveyance unit 50 may be configured to convey the main belt material 10 downstream by means other than a conveyor.

Next, the rubber sheet 20 is supplied to both ends in the width direction of one side (top side in FIG. 1A) of the main belt material 10 being conveyed, by the rubber sheet supply unit 40 (step S102 in FIG. 5). The rubber sheet supply unit 40 supplies the rubber sheet 20 overlapped on the top surface of the main belt material 10 so as to outwardly protrude from both ends in the width direction of the main belt material 10 being conveyed.

Next, the regions of the rubber sheet 20 that outwardly protrude from both ends of the main belt material 10 in the width direction are folded back to the other side (bottom side in FIG. 1A) of the main belt material 10 by the folding-back roller 31 (step S103 in FIG. 5). According to the present embodiment, the rubber sheet folding-back unit 30 including the folding-back roller 31 illustrated in FIG. 2 is provided at each width direction end, and each of the rubber sheet folding-back units 30 folds back to the other side a region of the rubber sheet 20 that outwardly protrudes in the width direction. According to the present embodiment, as described above, the region of the rubber sheet 20 that outwardly protrudes in the width direction is folded back in a direction perpendicular to the main belt material 10 by the upstream fold roller 31, and then gradually folded back further to align with the other side by the five auxiliary rollers disposed downstream of the folding-back roller 31.

As described above, the present embodiment is the belt manufacturing apparatus 200 for manufacturing the belt 100 in which both ends of the main belt material 10 in the width direction are wrapped with the rubber sheet 20. The belt manufacturing apparatus 200 includes: the conveyance unit for the main belt material 10 (the main belt conveyance unit 50); and the rubber sheet folding-back unit 30 including the folding-back roller 31 configured to fold back, from one side of the main belt material 10 to the other side of the main belt material 10, regions of the rubber sheet 20 that outwardly protrude from both ends of the main belt material 10 in the width direction. The folding-back roller 31 is disposed at both ends of the main belt material 10 in the width direction, and a roller surface that comes into contact with the rubber sheet 20 is formed by the elastic member 31c that can be elastically deformed inward in the radial direction of the folding-back roller 31. By adoption of such a configuration, the rubber sheet 20 receives elastic force from the elastic member 31c in the direction toward the center of the width direction of the main belt material 10, and therefore the rubber sheet 20 can be bent while pressing the rubber sheet 20 against the main belt material 10 with a defined load. Therefore, even when the width W of the main belt material 10 varies within an expected range, the folding-back roller 31 can continuously follow the width W of the main belt material 10, and the elastic member 31c continuously provides elastic force to the main belt material 10 and the rubber sheet 20 in the direction toward the center of the width direction. Thus, the occurrence of defects can be suppressed, where examples of defects include air entering between the rubber sheet 20 and the main belt material 10 when folding-back the rubber sheet 20 when the width of the main belt material 10 is smaller than a standard width, or a wrinkle on the rubber sheet 20 when folding-back the rubber sheet 20 when the width of the main belt material 10 is larger than the standard width.

Further, according to the present embodiment, the rubber sheet supply unit 40 is further included, which supplies the rubber sheet 20 to both ends in the width direction on the one side of the main belt material 10 being conveyed, and supplies the rubber sheet 20 overlapped on the main belt material 10 so as to outwardly protrude from both ends in the width direction of the main belt material 10 being conveyed. By adoption of such a configuration, the rubber sheet 20 can be precisely positioned relative to the main belt material 10 in the width direction of the main belt material 10, effectively suppressing the occurrence of defects such as a wrinkle on the rubber sheet 20 when the rubber sheet 20 is folded back.

Further, according to the present embodiment, the elastic member 31c is configured to be a spring member. By adoption of such a configuration, the folding-back roller 31 can follow the width W of the main belt material 10 with a simple configuration and press the rubber sheet 20 against the width direction end of the main belt material 10 with a defined load.

Further, according to the present embodiment, the folding-back roller 31 is disposed on the upstream side where the main belt material 10 is brought into the rubber sheet folding-back unit 30, and an auxiliary roller is further included, which is downstream of the folding-back roller 31 and is configured to promote folding-back of the rubber sheet 20 to the other side. By adoption of such a configuration, the rubber sheet 20 that has been folded by the folding-back roller 31 to a right angle relative to the main belt material 10 can be further folded back to align with the other side of the main belt material 10.

Further, according to the present embodiment, each auxiliary roller, relative to the folding-back roller 31 or another auxiliary roller adjacent on the upstream side, is configured to be inclined in a direction that increases the folding angle of the rubber sheet 20 as the rubber sheet 20 comes into contact with a roller surface of the auxiliary roller. By adoption of such a configuration, the rubber sheet 20 that has been folded by the folding-back roller 31 to a right angle relative to the main belt material 10 can be further gradually folded back to align with the other side of the main belt material 10.

Further, according to the present embodiment, the roller surface of the auxiliary roller is provided on the outer rings of the bearings that are disposed in a plurality of positions along the axial direction and are rotatable relative to the shaft member 31a. By adoption of such a configuration, the rotation of the roller surface can be changed in the axial direction according to the state of contact between the roller surface of the auxiliary roller and the rubber sheet 20, thereby suppressing an increase in friction between the roller surface of the auxiliary roller and the rubber sheet 20.

Further, according to the present embodiment, the roller surface of the auxiliary roller is coated with an anti-adhesion coating by filling recesses in irregularities of the roller surface with a resin. By adoption of such a configuration, sticking of the rubber sheet 20 to the roller surface of the auxiliary roller can be effectively suppressed, and conveyance resistance can be suppressed. Further, the rubber sheet 20 is not subjected to unintended tension, and therefore wrinkling of the rubber sheet 20 can be suppressed.

Further, according to the present embodiment, the main belt material 10 and rubber sheet 20 are configured to pass through a position in the rubber sheet folding-back unit 30 that is higher than the height position of the main belt material 10 in the main belt conveyance unit 50 upstream, and higher than the height position of the rubber sheet 20 in the rubber sheet supply unit 40. By adoption of such a configuration, appropriate tension is applied to the main belt material 10 and the rubber sheet 20 in the rubber sheet folding-back unit 30, and the width direction end of the rubber sheet 20 is pulled slightly downward in the rubber sheet folding-back unit 30, hanging downwards relative to the main belt material 10. This can inhibit the rubber sheet 20 from coming into strong contact with the folding-back roller 31.

Further, the present embodiment is the folding-back roller 31 used in the belt manufacturing apparatus 200 for manufacturing the belt 100 including the main belt material 10 that has both ends in the width direction wrapped with the rubber sheet 20. The folding-back roller 31 is configured to fold back, from one side of the main belt material 10 to the other side of the main belt material 10, regions of the rubber sheet 20 that outwardly protrude from both ends of the main belt material 10 in the width direction. The folding-back roller 31 includes: the shaft member 31a; the plurality of the rotating members 31b that are arranged separated in the axial direction of the shaft member 31a and are rotatable around the shaft member 31a; and the elastic member 31c that connects the rotating members 31b in the axial direction and forms a roller surface with which the rubber sheet 20 comes into contact. By adoption of such a configuration, the rubber sheet 20 receives elastic force from the elastic member 31c in the direction toward the center of the width direction of the main belt material 10, and therefore the rubber sheet 20 can be bent while pressing the rubber sheet 20 against the main belt material 10 with a defined load. Therefore, even when the width W of the main belt material 10 varies within an expected range, the folding-back roller 31 can continuously follow the width W of the main belt material 10, and the elastic member 31c continuously provides elastic force to the main belt material 10 and the rubber sheet 20 in the direction toward the center of the width direction. Thus, the occurrence of defects can be suppressed, where examples of defects include air entering between the rubber sheet 20 and the main belt material 10 when folding-back the rubber sheet 20 when the width of the main belt material 10 is smaller than a standard width, or a wrinkle on the rubber sheet 20 when folding-back the rubber sheet 20 when the width of the main belt material 10 is larger than the standard width.

Further, the present embodiment is the belt manufacturing method for manufacturing the belt 100 including the main belt material 10 that has both ends in the width direction wrapped with the rubber sheet 20. The belt manufacturing method includes the step of conveying the main belt material 10; and the step of folding back, from one side of the main belt material 10 to the other side of the main belt material 10, regions of the rubber sheet 20 that outwardly protrude from both ends of the main belt material 10 in the width direction, by means of the folding-back roller 31. The folding-back roller 31 is disposed at both ends of the main belt material 10 in the width direction, and a roller surface that comes into contact with the rubber sheet 20 is formed by the elastic member 31c that can be elastically deformed inward in the radial direction of the folding-back roller 31. By adoption of such a configuration, the rubber sheet 20 receives elastic force from the elastic member 31c in the direction toward the center of the width direction of the main belt material 10, and therefore the rubber sheet 20 can be bent while pressing the rubber sheet 20 against the main belt material 10 with a defined load. Therefore, even when the width W of the main belt material 10 varies within an expected range, the folding-back roller 31 can continuously follow the width W of the main belt material 10, and the elastic member 31c continuously provides elastic force to the main belt material 10 and the rubber sheet 20 in the direction toward the center of the width direction. Thus, the occurrence of defects can be suppressed, where examples of defects include air entering between the rubber sheet 20 and the main belt material 10 when folding-back the rubber sheet 20 when the width of the main belt material 10 is smaller than a standard width, or a wrinkle on the rubber sheet 20 when folding-back the rubber sheet 20 when the width of the main belt material 10 is larger than the standard width.

Although the present disclosure has been described based on the drawings and embodiments, it should be noted that a person skilled in the art may make variations and modifications based on the present disclosure. Therefore, it should be noted that such variations and modifications are included within the scope of the present disclosure. For example, the configurations, functions, or the like included in each embodiment may be rearranged as long as no logical inconsistency arises. The configurations, functions, or the like included in each embodiment may be used in combination with other embodiments, and multiple configurations, functions, or the like may be combined, divided, or partially omitted.

For example, according to the present embodiment, an apparatus for manufacturing the belt 100, the folding-back roller 31 used in the apparatus, and a method of manufacturing the belt 100 are described where the belt is a tire reinforcement member, but may also be used for manufacturing the belt 100 for applications other than a tire reinforcement member.

Further, according to the present embodiment, the belt manufacturing apparatus 200 is configured to include the rubber sheet supply unit 40, but it is not limited to this configuration. For example, the rubber sheet 20 previously disposed on both ends in the width direction of one side of the main belt material 10 may be supplied to the rubber sheet folding-back unit 30 by the main belt conveyance unit 50, and the rubber sheet 20 may be folded back.

### INDUSTRIAL APPLICABILITY

The present disclosure relates to the belt manufacturing apparatus 200, the folding-back roller 31, and the belt manufacturing method that do not degrade the reliability and durability of a tire even when material used in the belt layer of the tire is made thinner.

### REFERENCE SIGNS LIST

- 10: main belt material
- 10a: main belt roll material
- 20: rubber sheet
- 30: rubber sheet folding-back unit
- 31: folding-back roller
- 31a: shaft member
- 31b: rotating member
- 31c: elastic member
- 33a: first auxiliary roller
- 33b: second auxiliary roller
- 33c: third auxiliary roller
- 33d: fourth auxiliary roller
- 33e: fifth auxiliary roller
- 34: rubber sheet holding roller
- 35: main belt material holding roller
- 36a: main belt material support roller
- 36b: main belt material support roller
- 37: main belt material support roller
- 40: rubber sheet supply unit
- 50: main belt conveyance unit (conveyance unit)
- 100: belt
- 200: belt manufacturing apparatus
- W: (cut) width

## Claims

1. A belt manufacturing apparatus for manufacturing a belt in which both ends of main belt material in the width direction are wrapped with a rubber sheet, the belt manufacturing apparatus comprising:
a conveyance unit for the main belt material; and
a rubber sheet folding-back unit including a folding-back roller configured to fold back, from one side of the main belt material to the other side of the main belt material, regions of the rubber sheet that outwardly protrude from both ends of the main belt material in the width direction, wherein
the folding-back roller is disposed at both ends of the main belt material in the width direction, and a roller surface that comes into contact with the rubber sheet is formed by an elastic member that can be elastically deformed inward in the radial direction of the folding-back roller.

2. The belt manufacturing apparatus according to claim 1, further comprising a rubber sheet supply unit configured to supply the rubber sheet to both ends in the width direction on the one side of the main belt material being conveyed, and to supply the rubber sheet overlapped on the main belt material so as to outwardly protrude from both ends in the width direction of the main belt material being conveyed.

3. The belt manufacturing apparatus according to claim 1 or 2, wherein the elastic member is a spring member.

4. The belt manufacturing apparatus according to claim 1 or 2, wherein the folding-back roller is disposed on the upstream side where the main belt material is brought into the rubber sheet folding-back unit, and the belt manufacturing apparatus further comprises an auxiliary roller downstream of the folding-back roller that is configured to promote folding-back of the rubber sheet to the other side.

5. The belt manufacturing apparatus according to claim 4, wherein the auxiliary roller, relative to the folding-back roller or another auxiliary roller adjacent on the upstream side, is inclined in a direction that increases the folding angle of the rubber sheet as the rubber sheet comes into contact with a roller surface of the auxiliary roller.

6. The belt manufacturing apparatus according to claim 4, wherein the roller surface of the auxiliary roller is provided on outer rings of bearings that are disposed in a plurality of positions along the axial direction and are rotatable relative to a shaft member.

7. The belt manufacturing apparatus according to claim 4, wherein the roller surface of the auxiliary roller is coated with an anti-adhesion coating by filling recesses in irregularities of the roller surface with a resin.

8. The belt manufacturing apparatus according to claim 2, wherein the main belt material and the rubber sheet pass through a position in the rubber sheet folding-back unit that is higher than a height position of the main belt material in the conveyance unit that is upstream, and higher than a height position of the rubber sheet in the rubber sheet supply unit.

9. A folding-back roller used in a belt manufacturing apparatus for manufacturing a belt including a main belt material that has both ends in the width direction wrapped with a rubber sheet, wherein
the folding-back roller is configured to fold back, from one side of the main belt material to the other side of the main belt material, regions of the rubber sheet that outwardly protrude from both ends of the main belt material in the width direction, the folding-back roller comprising:
a shaft member; a plurality of rotating members that are arranged separated in the axial direction of the shaft member and are rotatable around the shaft member; and an elastic member that connects the rotating members in the axial direction and forms a roller surface with which the rubber sheet comes into contact.

10. A belt manufacturing method for manufacturing a belt including a main belt material that has both ends in the width direction wrapped with a rubber sheet, the belt manufacturing method comprising:
a step of conveying the main belt material; and
a step of folding back, from one side of the main belt material to the other side of the main belt material, regions of the rubber sheet that outwardly protrude from both ends of the main belt material in the width direction, by means of a folding-back roller, wherein
the folding-back roller is disposed at both ends of the main belt material in the width direction, and a roller surface that comes into contact with the rubber sheet is formed by an elastic member that can be elastically deformed inward in the radial direction of the folding-back roller.
